# EUROPÄISCHE PATENTSCHRIFT

(11) **EP 3 888 161 B1**
(45) Veröffentlichungstag und Bekanntmachung des Hinweises auf die Patenterteilung: **07.06.2023**
(21) Anmeldenummer: 19831990.7
(22) Anmeldetag: 27.11.2019
(51) Int. Cl.: H01M 4/04, H01M 4/72

(54) **VERFAHREN UND SYSTEM ZUR HERSTELLUNG EINES ENERGIESPEICHERS**
METHOD FOR THE MANUFACTURE OF AN ENERGY STORAGE UNIT
PROCÉDÉ DE FABRICATION D'UN ACCUMULATEUR D'ÉNERGIE

(30) Priorität: 28.11.2018 EP 18208750
(43) Veröffentlichungstag der Anmeldung: 06.10.2021
(73) Patentinhaber: Blackstone Technology Holding AG, 6340 Baar (CH)
(72) Erfinder: Ernst, Ulrich, 8954 Geroldswil (CH)
(74) Vertreter: Herrmann, Johanna
(86) Internationale Anmeldenummer: PCT/EP2019/082664
(87) Internationale Veröffentlichungsnummer: WO 2020/109351

(56) Entgegenhaltungen:
- EP-A1- 2 619 827
- WO-A1-2006/105966
- DE-U1-202005 004 664

## Beschreibung

### Hintergrund

Die vorliegende Erfindung betrifft ein Verfahren sowie ein System zur Herstellung eines Energiespeichers.

### Stand der Technik

Eine Anlage und ein Verfahren zur Herstellung eines dreidimensionalen Körpers mittels Siebdruckverfahren ist aus dem Dokument EP 2 999 595 B1 bekannt. Die Anlage umfasst einen Drucktisch mit einem Drucksieb, mittels dessen ein Drucknutzen mehrfach bedruckbar ist. Eine Mess- und Steuervorrichtung ist dazu ausgebildet, dass nach jedem durchgeführten Druck der Wert des Absprungs um die Auftragsstärke des zuvor durchgeführten Drucks erhöht wird.

Mittels einer derartigen Anlage kann ein Körper im Siebdruckverfahren hergestellt werden, der aus mehreren Lagen besteht. Hierzu muss nach dem Druck jeder Lage eine Härtung dieser Lage erfolgen, bevor eine weitere Lage gedruckt werden kann. Die Härtung kann eine chemische, thermische oder physikalische Härtung umfassen. Für die Durchführung der Härtung kann die Lage in die Härteanlage transportiert werden, gehärtet werden und anschliessend wieder auf dem Drucktisch positioniert werden, um eine weitere Lage aufzutragen. Die Notwendigkeit des Härtens der Lage erfordert die Verwendung desselben Materials für den aus mehreren Lagen bestehenden Körper, der im Siebdruckverfahren herzustellen ist. Aus diesem Grund werden derzeit mit einem dreidimensionalen Siebdruckverfahren nur Körper gedruckt, die aus einem einzigen Material bestehen.

Es besteht daher Bedarf für eine Vorrichtung und ein Verfahren zum Siebdruck eines Körpers, der mehrere Materialien enthält. Allerdings verändern sich bei Verwendung verschiedener Materialien die Anforderungen an das Siebdruckverfahren. Wenn jede Schicht aus einem anderen Material besteht, das als Paste auf ein Drucksieb aufgetragen wird und durch die entsprechenden Öffnungen des Drucksiebs auf eine darunterliegende Schicht aus einem anderen Material aufgetragen wird, muss dieses Material mittels eines anderen Härteverfahrens behandelt werden, damit es die gewünschte Festigkeit erhält, um im nachfolgenden Bearbeitungsschritt mit einer weiteren Schicht bedruckt zu werden. Um diesen Anforderungen gerecht zu werden, würde daher für jede Schicht eine eigene Härteanlage erforderlich sein, um das für diese Schicht geeignete Härteverfahren auszuführen. Dies hat zur Folge, dass nach jedem Druck der gesamte bedruckte Körper in eine für das entsprechende Schichtmaterial geeignete Härteanlage transportiert werden muss, in welcher das für diese Schicht geeignete Härteverfahren zur Anwendung kommt. Erst nach Abschluss dieses Härteverfahrens ist der bedruckte Körper wieder bereit für den Druck einer weiteren Schicht. Daher nimmt die Zykluszeit für die Produktion eines mehrschichtigen Gegenstandes entsprechend zu, insbesondere wenn der Gegenstand aus einer Vielzahl von Lagen aufgebaut ist. Jede gedruckte Schicht muss zu der entsprechenden Härteanlage transportiert werden, dort gehärtet werden und steht dann erst wieder für den nachfolgenden Produktionsschritt zur Verfügung.

Dieses Problem wurde übrigens für Solarzellen auf eine interessante Weise gelöst. Das Dokument EP1911584 B1 zeigt ein Verfahren zur Herstellung einer Solarzelle bei welchem unter anderem ein Siebdruckverfahren zum Einsatz kommt, in welchem eine Aluminiumschicht und eine Silberschicht auf die Aluminiumschicht im Siebdruckverfahren zur Herstellung einer Elektrode auf ein Siliziumsubstrat aufgetragen wird.

Die Solarzelle gemäss EP1911584 B1 weist eine Schicht aus Aluminium auf, welche als Elektrode verwendet wird, die sich auf einem Siliziumsubstrat befindet. Diese Aluminiumschicht wird mittels Siebdruck hergestellt. Auf diese Aluminiumschicht wird dann eine Silberschicht aufgetragen, ebenfalls mittels Siebdruck. Danach wird die Solarzelle gewendet und auf der Oberseite wird ebenfalls eine Silberschicht mittels Siebdruck aufgetragen. Erst danach wird ein einziger Härtungsschritt bei einer Temperatur von 700 - 900°C ausgeführt, wodurch das Silber aufschmilzt und in die Siliziumschicht diffundiert. Hierdurch wird gleichzeitig ein guter elektrischer Kontakt dieser beiden Schichten erzielt, der für den Elektronenfluss für den Betrieb der Solarzelle als Energiequelle für elektrische Energie erforderlich ist.

Das Siebdruckverfahren wird erfolgreich für Anwendungen eingesetzt, die aus einer einzigen Schicht oder wenigen Schichten, wie obige, beispielhaft genannte Solarzelle, bestehen. Beispielhaft ist in der DE20 2005 004664 U1 ein derartiges Siebdruckverfahren beschrieben.

Aufgrund der Problematik, dass jede Schicht separat gehärtet werden muss, wenn die Schicht eine andere Zusammensetzung aufweist, als die anderen Schichten, würde das Siebdruckverfahren für Bauteile, die aus einer Vielzahl von Schichten aus unterschiedlichen Materialien bestehen, nicht wirtschaftlich einsetzbar sein.

Es ist aus der DE112016002917T5 bekannt, die Elektroden einer Solarbatterie im Siebdruckverfahren herzustellen. Diese Elektroden bestehen aus einer Silberpaste, die auf der Vorderseite und der Rückseite des Siliziumsubstrats aufgetragen werden, wie bereits durch die EP1911584 B1 beschrieben. In diesem Dokument ist die Verwendung einer Feuchtigkeitsanpassungseinrichtung beschrieben, um zu vermeiden, dass die auf die Siebdruckplatte aufgebrachte Silberpaste trocknet, was für eine Serienproduktion nachteilig ist, da eine angetrocknete Silberpaste ihre Viskosität ändert und daher für wiederholte Druckvorgänge nur beschränkt einsetzbar ist. Somit soll gemäss DE112016002917T5 die Serientauglichkeit des Siebdruckverfahrens zur Herstellung einer einzigen Schicht aus einer Silberpaste für eine Elektrode einer Solarbatterie verbessert werden.

Das Dokument EP2619827 A1 bzw. WO2012/038628 A1 beschreibt ein Verfahren zur Herstellung einer einzigen Elektrode für eine Li-Ionen Batterie mittels Flexodruck, eines Tiefdruckverfahrens oder eines Siebdruckverfahrens. Die Elektrode soll flexibel sein, was bislang erforderte, dass polymere Bindematerialien eingesetzt werden, d.h. leitfähige Polymere, was vermutlich zu einem geringeren Anteil an aktivem Material in der Elektrodenpaste (in diesem Dokument als «ink», also Tinte bezeichnet) führen dürfte. Daher wird gemäss EP2619827 A1 eine wässrige «Tinte» vorgeschlagen, was den Einsatz eines wasserlöslichen Polymers erfordert, aber den Vorteil hat, dass ein höherer Anteil an aktivem Material in der Elektrodenpaste eingesetzt werden kann. Die diesem Dokument zugrundeliegende Problemstellung dürfte die Erhöhung der Kapazität einer Lithium / Lithium-Ionen-Zelle betreffen, was durch Verwendung einer wässrigen Tinte realisiert wird. Auch in diesem Dokument findet sich kein Hinweis auf die Herstellung von Elektroden aus unterschiedlichen Materialien, das heisst unter Verwendung von aktiven Massen unterschiedlicher chemischer Zusammensetzung, die übereinander gestapelt werden können.

In der WO2006/105966 A1 werden positive und negative Elektroden nebeneinander, d.h. in derselben Schicht auf einem flächigen, elektrisch nichtleitenden Substrat angeordnet. Diese Anordnung bedingt, dass der Elektrolyt die beiden Elektroden überdecken muss. Daher wird für diese Lösung die doppelte Menge an Elektrolyt benötigt, weil die doppelte Fläche, nämlich sowohl die Fläche, die von der positiven Elektrode als auch die Fläche, die von der negativen Elektrode eingenommen wird, durch den Elektrolyten abgedeckt werden muss.

Dokument DE20 2005 004664 U1 betrifft ein Sieb für ein Siebdruckverfahren. Dieses Sieb weist ein Siebdruckgewebe mit voneinander getrennten elektrischen Anschlüssen auf, die zur Widerstandserwärmung des Siebgewebes an eine Stromquelle anschliessbar sind. Dieses Dokument betrifft somit ein beheizbares Sieb.

In der Folge soll beispielhaft der Aufbau und das Herstellungsverfahren für einen Energiespeicher beschrieben werden, der eine elektrochemische Zelle enthält.

Eine elektrochemische Zelle umfasst eine Kathode, also eine positive Elektrode, eine Anode, also eine negative Elektrode, einen Separator, der die positive Elektrode von der negativen Elektrode trennt, sowie ein Gehäuse, welches die positive Elektrode, die negative Elektrode, den Separator und einen Elektrolyten aufnimmt, in welchem die vorgenannte positive Elektrode, die negative Elektrode und der Separator zumindest teilweise aufgenommen sind. Die Anode und Kathode können über Kontakte einen Stromkreis mit einem Verbraucher ausbilden.

Eine elektrochemische Zelle kann für eine Primärbatterie oder eine Sekundärbatterie zum Einsatz kommen.

Als Primärbatterie wird in der Folge eine Batterie bezeichnet, die nicht wiederaufladbar ist, das heisst, für den einmaligen Gebrauch bestimmt ist.

Als Sekundärbatterie wird in der Folge eine Batterie bezeichnet, die wiederaufladbar ist: Oftmals wird für diesen Typ Energiespeicher auch der Begriff Akkumulator verwendet.

Akkumulatoren sind bereits seit Jahrzehnten im Einsatz, für deren elektrochemische Zellen können unterschiedlichste Materialien zum Einsatz kommen.

Anhand des in Fahrzeugen häufig zum Einsatz kommenden Blei-Säure Akkumulators soll beispielhaft dessen Herstellungsverfahren erläutert werden.

Die Anode und die Kathode enthalten Blei in verschiedenen Oxidationsstufen. Zwischen der Anode und der Kathode befindet sich ein Separator, eine Membran, die für Elektronen oder Ionen in beide Richtungen durchlässig ist. Die Anode und Kathode befinden sich im Betriebszustand in einem Elektrolyten, für das vorgenannte Beispiel eines Blei-Säure-Akkumulators Schwefelsäure.

Allerdings werden heutzutage Anoden und Kathoden separat hergestellt. Die Herstellung der Kathode umfasst das Giessen einer eines Gitters aus Blei, welches in einem zweiten Verfahrensschritt mit einer positiven pastenförmigen aktiven Masse befüllt wird. Die Herstellung der Anode kann ebenfalls entweder das Giessen eines Gitters umfassen oder das Gitter kann mittels aus einer perforierten Platte durch ein Streckverfahren erhalten werden. Auch das Gitter der Kathode wird mit der entsprechenden negativen pastenförmigen aktiven Masse befüllt. Nach dem Auftragen der positiven oder negativen pastenförmigen aktiven Masse auf die Gitterstruktur erfolgt ein Trocknungsschritt, damit die aktive Masse in der Gitterstruktur verbleibt.

Damit Kathode und Anode nicht direkt miteinander in elektrischen Kontakt kommen, wird ein Separator zwischen jeder Kathode und Anode vorgesehen. Gemäss einer Verfahrensvariante kann eine der Elektroden in eine Separatortasche gesteckt werden. Der Separator ist als ein blattförmiges, mikroporöses Trennelement ausgebildet, welches für den Elektrolyten, Elektronen oder Ionen durchlässig ist, aber nicht für die Partikel der entsprechenden positiven oder negativen pastenförmigen aktiven Masse.

Kathoden, Separatoren und Anoden werden zu einem Zellstapel gebündelt, welcher die Primärzelle bildet. Der Zellstapel enthält üblicherweise 6 Kathoden, 6 Anoden die abwechselnd zueinander angeordnet sind, sowie die entsprechende Anzahl Separatoren, die sich zwischen je zwei benachbarten Kathoden und Anoden befinden. In einem nachfolgenden Verfahrensschritt werden die Kathoden elektrisch leitend miteinander verbunden, sodass bei Anlegen einer elektrischen Spannung ein Strom zu den Kathoden fliessen kann oder von den Kathoden abfliessen kann. In gleicher Weise werden die Anoden elektrisch leitend miteinander verbunden, sodass bei Anlegen einer elektrischen Spannung ein Strom zu den Anoden fliessen kann oder von den Anoden abfliessen kann.

Ein Akkumulator enthält eine Mehrzahl von Zellstapeln. Die Zellstapel werden in ein Kunststoffgehäuse gestellt, welches zur Aufnahme des Elektrolyten bestimmt ist. Benachbarte Zellstapel sind durch Gehäusezwischenwände voneinander getrennt. Die Kontakte der Kathoden und Anoden jeweils benachbarter Zellstapel werden miteinander üblicherweise mittels eines Schweissverfahrens verbunden. Das Gehäuse wird danach mittels eines Deckels verschlossen. Der Deckel enthält Öffnungen für die positiven und negativen Kontaktpole sowie Öffnungen zur Zufuhr des flüssigen Elektrolyten. Die Kontaktpole werden nach der Montage des Deckels angegossen. Der Deckel ist üblicherweise nicht abnehmbar, daher wird jedem Zellstapel der Elektrolyt durch die hierfür vorgesehenen Öffnungen zugeführt, die nach Abschluss der Befüllung ebenfalls verschlossen werden. Erst in diesem Zustand kann ein initialer Ladezyklus (Formation) durchgeführt werden. Nach Abschluss des Ladezyklus ist der Akkumulator bereit für den Einsatz.

Das beschriebene Herstellungsverfahren ist in der Praxis sehr kompliziert, da es sehr viele Prozessschritte umfasst, die teilweise diskontinuierlich ablaufen, beispielsweise die Trocknung der aktiven Masse, die in Trockenschränken erfolgt und bis zu 48h in Anspruch nehmen kann. Demzufolge dürfte die Durchlaufzeit, die zur Herstellung eines derartigen Akkumulators erforderlich ist, immer noch einige Tage betragen.

Die vorgängig beschriebenen herkömmlichen Siebdruckverfahren eignen sich daher für die Herstellung eines Energiespeichers in mehreren übereinander liegenden Schichten oder Lagen nicht.

### Aufgabe der Erfindung

Daher ist es Aufgabe der Erfindung, ein Herstellungsverfahren für einen Energiespeicher, umfassend zumindest eine erste und zweite Elektrode sowie einem zwischen diesen Elektroden angeordneten Separator, derart zu verbessern, dass die Herstellungsdauer für den Energiespeicher auf maximal eine Stunde verkürzt werden kann.

### Beschreibung der Erfindung

Die Lösung der Aufgabe der Erfindung erfolgt durch eine Vorrichtung sowie ein Verfahren umfassend den Siebdruck eines Zellstapels für einen Energiespeicher. Ein derartiger Energiespeicher ist mittels des Siebdruckverfahrens als ein Körper herstellbar, der aus mehreren unterschiedlichen Materialien besteht.

Die Lösung der Aufgabe erfolgt insbesondere durch ein Verfahren gemäss Anspruch 1.

Vorteilhafte Verfahrensvarianten sind Gegenstand der Ansprüche 2 bis 11 Die Lösung der Aufgabe der Erfindung erfolgt durch ein System gemäss Anspruch 12 Vorteilhafte Ausführungsbeispiele des Systems sind Gegenstand der Ansprüche 13 bis 15.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für die erfindungsgemässe Vorrichtung sowie das erfindungsgemässe Verfahren. Die Beschreibung einer bestimmten Vorrichtung oder eines bestimmten Verfahrens ist nur als beispielhaft anzusehen. In der Beschreibung und den Ansprüchen werden die Begriffe "enthalten", "umfassen", "aufweisen" als "enthalten, aber nicht beschränkt auf" interpretiert.

Das erfindungsgemässe Verfahren zur Herstellung eines Energiespeichers umfasst eine Druckauflage, die zur Auflage eines Zellelements oder Zellstapels eines Energiespeichers ausgebildet ist, ein Drucksieb, welches einen Rahmen aufweist, der eine Gitterstruktur zur Aufnahme einer Paste enthält, wobei mittels einer Auftragungsvorrichtung die Gitterstruktur mit der Paste befüllt wird. Die Gitterstruktur wird mit der Paste vom Rahmen abgekoppelt. Die Gitterstruktur und die Paste werden auf der Druckauflage abgelegt, wobei die Gitterstruktur und die Paste eine Elektrode des Zellelements oder Zellstapels ausbilden. Die Verteilvorrichtung kann beispielsweise als Rakel, Rolle oder Schwamm ausgebildet sein. Die Paste enthält insbesondere eine aktive Masse, das heisst, ein Material, welches geeignet ist, als Elektronendonor oder Ionendonor oder als Elektronenrezeptor oder Ionenrezeptor zu wirken. Insbesondere können während des Entladungsvorgangs des Energiespeichers Elektronen durch eine chemische Reaktion in der Paste freigesetzt werden. Insbesondere können während eines Ladungsvorgangs des Energiespeichers Elektronen oder Ionen durch eine chemische Reaktion in der Paste gebunden werden. Insbesondere kann es sich bei den chemischen Reaktionen um elektrochemische Reaktionen handeln. Die chemischen Reaktionen können reversibel ablaufen, je nachdem, ob der Energiespeicher entladen wird, um elektrische Energie bereitzustellen oder der Energiespeicher für die spätere Bereitstellung von elektrischer Energie aufgeladen wird.

Gemäss einem Ausführungsbeispiel werden eine Mehrzahl von Gitterstrukturen mit unterschiedlichen Pasten befüllt, um zumindest eine erste und eine zweite Elektrode auszubilden, die voneinander durch einen Separator getrennt sind.

Gemäss einem Ausführungsbeispiel wird die erste oder zweite Elektrode in einer Trocknungsanlage oder Härteanlage getrocknet oder gehärtet, nachdem die Gitterstruktur vom Rahmen abgekoppelt worden ist, bevor die erste Elektrode auf der Druckauflage oder die zweite Elektrode auf dem Separator angeordnet wird.

Der Rahmen des Drucksiebs enthält gemäss einem Ausführungsbeispiel eine erste Gitterstruktur, welche zur Aufnahme einer ersten Paste ausgebildet ist, wobei die erste Paste mittels der Auftragungsvorrichtung auf der ersten Gitterstruktur aufgetragen wird und mittels einer Verteilvorrichtung auf der Gitterstruktur verteilt wird, wobei die erste Paste in den Ausnehmungen oder Öffnungen der ersten Gitterstruktur aufgenommen wird. Hierdurch wird eine erste Elektrode des Zellelements oder Zellstapels erhalten. Nach einem Ausführungsbeispiel kann die erste Elektrode in einer ersten Trocknungsanlage oder Härteanlage getrocknet oder gehärtet werden. Insbesondere kann die erste Gitterstruktur vom Rahmen abgekoppelt werden und die erste Elektrode auf der Druckauflage abgelegt werden. Auf die erste Elektrode kann ein Separator abgelegt werden. Wenn eine Mehrzahl von Separatoren für die Herstellung eines Zellstapels benötigt wird, soll dieser Separator nachfolgend als erster Separator bezeichnet werden.

Gemäss diesem Ausführungsbeispiel wird im Rahmen des Drucksiebs eine zweite Gitterstruktur angeordnet, welche zur Aufnahme einer zweiten Paste ausgebildet ist, wobei die zweite Paste mittels der Auftragungsvorrichtung auf der zweiten Gitterstruktur aufgetragen wird und mittels der Verteilvorrichtung verteilt wird, sodass die zweite Paste in den Ausnehmungen oder Öffnungen der zweiten Gitterstruktur aufgenommen wird, sodass eine zweite Elektrode des Zellelements oder Zellstapels erhalten wird, wobei anschliessend die zweite Gitterstruktur mit der zweiten Paste vom Rahmen abgekoppelt wird und auf den ersten Separator abgelegt wird.

Gemäss einem Ausführungsbeispiel wird die erste oder zweite Elektrode in einer Trocknungsanlage oder Härteanlage getrocknet oder gehärtet, nachdem die erste oder zweite Gitterstruktur vom Rahmen abgekoppelt worden ist, bevor die erste Elektrode auf der Druckauflage oder die zweite Elektrode auf dem ersten Separator abgelegt wird. Gemäss einem Ausführungsbeispiel wird die zweite Elektrode in einer zweiten Trocknungsanlage oder Härteanlage getrocknet oder gehärtet, sodann die zweite Elektrode auf dem ersten Separator abgelegt. Anschliessend wird auf der zweiten Elektrode ein zweiter Separator abgelegt, wenn das Zellelement oder der Zellstapel noch nicht vollständig ist.

Alternativ kann gemäss einem Ausführungsbeispiel eine Trennschicht vorgesehen werden, wenn die Herstellung des Zellelements oder Zellstapels abgeschlossen ist. Die Trennschicht kann eine Kunststoffschicht umfassen. Die Trennschicht kann Bestandteil eines Kunststoffgehäuses sein, welches das Zellelement oder eine Mehrzahl von Zellelementen, also den Zellstapel, aufnimmt. Gemäss einem Ausführungsbeispiel umfasst somit der Zellstapel eine Mehrzahl von Zellelementen. In diesem Fall werden die vorhergehend beschriebenen Verfahrensschritte wiederholt ausgeführt. Das heisst insbesondere, dass gemäss diesem Ausführungsbeispiel eine weitere erste Gitterstruktur in den Rahmen des Drucksiebs montiert wird, sodass im Rahmen des Drucksiebs die weitere erste Gitterstruktur aufgenommen, insbesondere gehalten wird. Die weitere erste Gitterstruktur ist zur Aufnahme der ersten Paste ausgebildet, wobei die erste Paste mittels der Auftragungsvorrichtung auf der weiteren ersten Gitterstruktur aufgetragen wird und mittels der Verteilvorrichtung auf der Gitterstruktur verteilt wird, sodass die erste Paste in den Ausnehmungen oder Öffnungen der weiteren ersten Gitterstruktur aufgenommen wird. Hierdurch wird eine weitere erste Elektrode des Zellelements oder Zellstapels erhalten. Nach einem Ausführungsbeispiel kann die weitere erste Elektrode in einer ersten Trocknungsanlage oder Härteanlage getrocknet oder gehärtet werden. Insbesondere kann die weitere erste Gitterstruktur vom Rahmen abgekoppelt werden und die weitere erste Elektrode auf der Druckauflage abgelegt werden, das heisst insbesondere auf einem Separator aufgelegt werden, welcher die weitere erste Elektrode von der darunter befindlichen zweiten Elektrode trennt. Auf die weitere erste Elektrode kann ein weiterer Separator abgelegt werden.

Gemäss diesem Ausführungsbeispiel wird im Rahmen des Drucksiebs eine weitere zweite Gitterstruktur angeordnet, welche zur Aufnahme der zweiten Paste ausgebildet ist, wobei die zweite Paste mittels der Auftragungsvorrichtung auf der weiteren zweiten Gitterstruktur aufgetragen und mittels der Verteilvorrichtung auf der weiteren zweiten Gitterstruktur verteilt wird, sodass die zweite Paste in den Ausnehmungen oder Öffnungen der weiteren zweiten Gitterstruktur aufgenommen wird, sodass eine weitere zweite Elektrode des Zellstapels erhalten wird, wobei anschliessend die weitere zweite Gitterstruktur mit der zweiten Paste vom Rahmen abgekoppelt wird und auf den weiteren Separator aufgetragen wird. Insbesondere können eine Mehrzahl von ersten und zweiten Elektroden in einer wechselweisen Reihenfolge auf der Druckauflage angeordnet werden, das heisst, dass auf eine erste Elektrode eine zweite Elektrode folgt und auf die zweite Elektrode wiederum eine erste Elektrode folgt.

Gemäss einem Ausführungsbeispiel enthält jedes der Zellelemente einen Elektrolyten. Der Elektrolyt kann einen Feststoff, eine Flüssigkeit oder ein Gas umfassen. Nach einem Ausführungsbeispiel ist der Elektrolyt in der ersten oder zweiten Paste enthalten.

Nach einem Ausführungsbeispiel wird der Zellstapel in ein Gehäuse gelegt oder gestellt, wobei das Gehäuse anschliessend mit einem Elektrolyten befüllt wird, der die Zellelemente zumindest teilweise umgibt. Das Gehäuse kann dann mit einem Deckel verschlossen werden, sodass ein Auslaufen des Elektrolyten verhindert werden kann. Das Gehäuse kann insbesondere als ein Kunststoffgehäuse ausgebildet sein.

Gemäss einem Ausführungsbeispiel ist der Separator oder sind die Separatoren derart ausgebildet, dass sie einen Austausch von Elektronen oder Ionen über den Elektrolyten zwischen den ersten und zweiten Elektroden ermöglichen, aber einen Stromfluss von der ersten Elektrode zur zweiten Elektrode unterbinden. Gemäss einem Ausführungsbeispiel enthält der Separator ein porenhaltiges Material. Gemäss einem Ausführungsbeispiel enthält der Separator ein poröses Material. Der Separator kann beispielsweise in einem Sinterverfahren hergestellt werden. Gemäss einem Ausführungsbeispiel enthält der Separator eine Mehrzahl von Durchgängen, welche den Elektrolyten enthalten und einen Transport von Ionen oder Elektronen von der ersten zur zweiten Elektrode oder umgekehrt ermöglichen.

Ohne auf eine bestimmte Konfiguration beschränkt zu sein, kann die erste Elektrode als eine Kathode ausgebildet sein und die zweite Elektrode als eine Anode ausgebildet sein. Selbstverständlich lässt sich das Verfahren in gleicher Weise anwenden, wenn die erste Elektrode als eine Anode ausgebildet ist und die zweite Elektrode als eine Kathode ausgebildet ist.

Gemäss einem Ausführungsbeispiel weist jede der Gitterstrukturen je ein Kontaktende auf, welches mit sämtlichen zu gleichpoligen Elektroden gehörigen Gitterstrukturen des Zellstapels verbunden ist. Gemäss einem Ausführungsbeispiel weist jede der ersten und zweiten Gitterstrukturen jedes Zellelements eines Zellstapels je ein Kontaktende auf, welches mit sämtlichen gleichpoligen Gitterstrukturen des Zellstapels verbunden ist.

Gemäss einem Ausführungsbeispiel wird eine Trennschicht vorgesehen, wenn die Herstellung des Zellelements oder des Zellstapels abgeschlossen ist. Gemäss einem Ausführungsbeispiel ist die Trennschicht als eine Wand eines Gehäuses ausgebildet. Gemäss einem Ausführungsbeispiel wird der Zellstapel in einem Gehäuse aufgenommen. Gemäss einem Ausführungsbeispiel sind das Zellelement oder der Zellstapel zwischen einer ersten fluiddichten Trennschicht und einer zweiten fluiddichten Trennschicht angeordnet. Gemäss einem Ausführungsbeispiel wird die erste fluiddichte Trennschicht auf der Druckauflage positioniert und die erste Elektrode auf der ersten fluiddichten Trennschicht angeordnet.

Gemäss einem Ausführungsbeispiel werden auf der Druckauflage eine Mehrzahl von Elektroden für eine Mehrzahl von Zellelementen oder Zellstapeln nebeneinander angeordnet. Insbesondere können auf der Druckauflage eine Mehrzahl von ersten und zweiten Elektroden für eine Mehrzahl von Zellelementen oder Zellstapeln nebeneinander gedruckt werden.

Gemäss einem Ausführungsbeispiel werden die Zellelemente oder Zellstapel nach Fertigstellung voneinander getrennt. Hierzu kann eine Trennvorrichtung vorgesehen sein, beispielsweise eine Stanzvorrichtung oder eine Schneidvorrichtung. Die derart getrennten Zellelemente oder Zellstapel können in einem Gehäuse angeordnet werden. Die im Gehäuse befindlichen Zellelemente oder Zellstapel können zumindest teilweise von einem Elektrolyten umgeben werden, der in das Gehäuse eingefüllt wird, nachdem die Zellelemente oder Zellstapel im Gehäuse angeordnet worden sind.

Ein System enthält eine Vorrichtung zur Herstellung eines Energiespeichers und den Energiespeicher. Die Vorrichtung umfasst eine Druckauflage, wobei die Druckauflage zur Auflage eines Zellelements oder Zellstapels eines Energiespeichers ausgebildet ist. Die Vorrichtung umfasst ein Drucksieb, welches einen Rahmen aufweist, der eine Gitterstruktur zur Aufnahme einer Paste für eine Elektrode des Energiespeichers enthält. Mittels einer zur Vorrichtung gehörigen Auftragungsvorrichtung ist die Paste auf die Gitterstruktur auftragbar und mittels einer Verteilvorrichtung auf der Gitterstruktur verteilbar, sodass Öffnungen oder Ausnehmungen der Gitterstruktur mit der Paste befüllbar sind. Die Gitterstruktur ist mit der Paste vom Drucksieb abkoppelbar. Die Gitterstruktur und die Paste bilden die Elektrode des Zellelements oder Zellstapels des Energiespeichers aus.

Gemäss einem Ausführungsbeispiel des Systems umfasst die Vorrichtung eine erste Auftragungsvorrichtung enthaltend eine erste Paste und eine zweite Auftragungsvorrichtung enthaltend eine zweite Paste. Im Rahmen des Drucksiebs ist gemäss diesem Ausführungsbeispiel eine erste Gitterstruktur angeordnet, welche zur Aufnahme der ersten Paste ausgebildet ist. Mittels der ersten Auftragungsvorrichtung ist gemäss diesem Ausführungsbeispiel die erste Paste auf die erste Gitterstruktur für eine erste Elektrode auftragbar. Die erste Auftragungsvorrichtung ist gemäss diesem Ausführungsbeispiel zum Auftragen der ersten Paste auf der ersten Gitterstruktur auf der Druckauflage ausgebildet. Insbesondere können in der ersten Gitterstruktur vorhandene Ausnehmungen oder Öffnungen mit der ersten Paste befüllt werden. Die erste Gitterstruktur, enthaltend die erste Paste, ist gemäss diesem Ausführungsbeispiel vom Rahmen des Drucksiebs abkoppelbar und auf der Druckauflage ablegbar. Die Verteilvorrichtung ist gemäss diesem Ausführungsbeispiel zur Verteilung der ersten Paste auf der ersten Gitterstruktur auf der Druckauflage ausgebildet, wobei die erste Gitterstruktur, enthaltend die erste Paste, vom Rahmen des Drucksiebs abkoppelbar ist und auf der Druckauflage ablegbar ist.

Der Rahmen ist gemäss diesem Ausführungsbeispiel zur Aufnahme einer zweiten Gitterstruktur ausgebildet. Mittels der zweiten Auftragungsvorrichtung ist gemäss diesem Ausführungsbeispiel die zweite Paste auf die zweite Gitterstruktur für eine zweite Elektrode auftragbar. Die zweite Auftragungsvorrichtung ist gemäss diesem Ausführungsbeispiel zum Auftragen der zweiten Paste auf der zweiten Gitterstruktur auf der Druckauflage ausgebildet. Insbesondere können in der zweiten Gitterstruktur vorhandene Ausnehmungen oder Öffnungen mit der zweiten Paste befüllt werden. Die Verteilvorrichtung ist gemäss diesem Ausführungsbeispiel zur Verteilung der zweiten Paste auf der zweiten Gitterstruktur auf der Druckauflage ausgebildet. Die zweite Gitterstruktur, enthaltend die zweite Paste ist vom Rahmen des Drucksiebs abkoppelbar und auf der Druckauflage ablegbar. Insbesondere kann die durch die zweite Gitterstruktur und die zweite Paste gebildete zweite Elektrode auf einem Separator abgelegt werden, der die zweite Elektrode von der darunter liegenden ersten Elektrode trennt.

Gemäss einem Ausführungsbeispiel ist ein Separator zwischen zwei benachbarten Elektroden angeordnet.

Die Gitterstruktur oder die Paste können gemäss einem Ausführungsbeispiel ein Metall oder ein Metallion enthalten. Gemäss einem Ausführungsbeispiel kann das Metall oder Metallion in der Form von Partikeln eines Pulvers vorliegen. Das Metall oder Metallion kann ein Element aus der Gruppe bestehend aus Al, Au, Ag, Ba, Bi, Ca, Ce, Cd, Co, Cr, Cu, Er, Fe, Hf, Ga, Gd, In, K, La, Li, Na, Nb, Nd, Ni, Mo, Mn, Mg, Pb, Pr, Pt, Sc, Sn, Re, Rh, Ru, Ta, Te, Th, Ti, V, W, Y, Yb, Zn, Zr enthalten. Ein Partikel kann eine Mehrzahl von Metallen oder Metallionen enthalten, insbesondere kann das Partikel eine Legierung oder ein Ionengitter enthalten. Nach einem Ausführungsbeispiel kann das Partikel einen Kern und einen Mantel enthalten, wobei sich das Metall des Kerns vom Metall des Mantels unterscheiden kann. Das Pulver kann nach einem Ausführungsbeispiele Partikel umfassen, die eine intermetallische Verbindung enthalten.

Nach einem Ausführungsbeispiel kann die Gitterstruktur oder die Paste eine Mischung aus zumindest zwei Elementen der Gruppe bestehend aus Kunststoffen, Keramiken und Metallen umfassen. Nach einem Ausführungsbeispiel kann die Paste aus Partikeln bestehen, wobei die Partikel eine Mischung aus zumindest zwei Elementen der Gruppe bestehend aus Kunststoffen, Keramiken und Metallen umfassen.

Nach einem Ausführungsbeispiel kann die Paste beschichtete Partikel enthalten. Beispielsweise kann ein Partikel, welches einen Kunststoff oder eine Keramik enthält, mit einem Metall beschichtet werden. Der Kunststoff kann ein Element der vorgängig oder nachfolgend beschriebenen Kunststoffe enthalten.

Der Metallanteil in der Mischung kann, um einen wirksamen Effekt zu erzielen, 0.01 - 10 Gew % betragen. Als besonders vorteilhaft hat sich eine Konzentration von 0.05 - 5 Gew% erwiesen.

Die Erfindung besteht demzufolge darin, Kunststoff-, Metall- und Keramikpasten, welche eine für die gewünschte Anmeldung vorteilhafte Eigenschaften aufweisen in geeigneter Art und Weise mit einem Bindemittel zu vermischen, um auf diese Weise für die Verarbeitung im Siebdruckverfahren geeignet zu sein.

Derartige Mischungen können beispielsweise in Rührkesseln, Ultraschallhomogenisatoren, Hochdruckhomogenisatoren, in Rohren, die dynamische Mischer oder statische Mischer enthalten, verarbeitet werden.

Das Zerkleinern erfolgt in hierfür geeigneten Mahlgeräten, wie beispielsweise Kugelmühlen, Rührwerkskugelmühlen, Zirkulationsmühlen (Rührwerkskugelmühle mit Stift-Mahlsystem), Scheibenmühlen, Ringkammermühlen, Doppelkonusmühlen, Dreiwalzenwerken und Batchmühlen. Die Mahlgeräte können mit Mahlkammern mit Kühlvorrichtungen zur Abführung der beim Mahlvorgang eingetragenen Wärmeenergie ausgestattet sein.

Bevorzugt erfolgt die Zerkleinerung unter Zugabe der Hauptmenge, insbesondere wenigstens 80 % bis 100 % des Trägermediums. Die für das Zerkleinern erforderliche Zeitdauer richtet sich in an sich bekannter Weise nach dem gewünschten Feinheitsgrad bzw. der Teilchengrösse der Partikel. Bewährt haben sich beispielsweise eine Mahldauer im Bereich von 30 Minuten bis 72 Stunden, obwohl auch eine längere Zeitdauer denkbar ist.

Druck- und Temperaturbedingungen beim Zerkleinern sind im Allgemeinen unkritisch, so hat sich beispielsweise Normaldruck als geeignet erwiesen. Als Temperaturen haben sich beispielsweise Temperaturen im Bereich von 10 °C bis 100 °C als geeignet erwiesen.

Der Gehalt der in der Paste enthaltenen Elektronen- oder Ionendonoren beträgt vorzugsweise wenigstens 10 Gew.-%, besonders bevorzugt wenigstens 20 Gew.-%, bezogen auf das Gesamtgewicht der Zubereitung.

Der Gehalt an reaktivem Metall oder reaktiven Ionen in der aktiven Masse beträgt vorzugsweise wenigstens 50 Gew.-%, besonders bevorzugt wenigstens 70 Gew.- %, bezogen auf den Anteil an Elektronen- oder Ionendonoren der Paste.

Keramikpasten können beispielsweise aluminiumhaltige Pulver umfassen, beispielsweise Aluminiumoxid Al₂O₃ oder Aluminiumnitrid AIN. Verwendet werden können auch verschiedene Oxide oder auch nicht oxidative Verbindungen, wie beispielsweise Karbide, Nitride, oder Boride. Ein Keramikpulver kann ein Element aus der Gruppe bestehend aus ZrO₂, TiO₂, TiC, TiB, TiB₂, TiN, MgO, SiC, SiO₂, Si₃N₄, BN, B₄C, WC enthalten. Das Keramikpulver kann eine Mischung von mindestens zwei der vorgenannten Komponenten umfassen.

Die Paste kann ein Trägermedium als kohärente Phase enthalten, welches bei Standardbedingungen fest oder fliessfähig ist. Das Trägermedium kann eine Keramik oder einen Kunststoff umfassen. Das Trägermedium ist daher insbesondere nicht flüssig. Als Trägermedium werden beispielsweise Ester von Alkyl- und Arylcarbonsäuren, hydrierte Ester von Arylcarbonsäuren, mehrwertige Alkohole, Etheralkohole, Polyetherpolyole, Ether, gesättigte acyclische und cyclische Kohlenwasserstoffe, Mineralöle, Mineralölderivate, Siliconöle, aprotisch polaren Lösungsmitteln und Mischungen eingesetzt.

Nach einem Ausführungsbeispiel enthält der Separator oder die Paste Graphit, insbesondere Graphen.

Nach einem Ausführungsbeispiel enthalten enthält der Separator oder die Paste einen Kunststoff. Der Kunststoff kann insbesondere Polymerzusammensetzungen umfassen, die eine Polymerkomponente enthalten oder aus einer Polymerkomponente bestehen, die vorzugsweise ausgewählt ist aus der Gruppe der Polyolefine, Polyolefincopolymere, Polytetrafluoroethylene, Ethylen-Tetrafluoroethylen-Copolymere, Polyvinylchloride, Polyvinylidenchloride, Polyvinylalkohole, Polyvinylester, Polyvinylalkanale, Polyvinylketale, Polyamide, Polyimide, Polycarbonate, Polycarbonat-Blends, Polyester, Polyester-Blends, Poly(meth)acrylate, Poly(meth)acrylat-Styrolcopolymer Blends, Poly(meth)acrylat-Polyvinylidendifluorid-Blends, Polyurethane, Polystyrole, Styrolcopolymere, Polyether, Polyetherketone und Polysulfone und deren Mischungen.

Gemäss einem Ausführungsbeispiel enthält der Separator oder ein in der Paste verwendeter Kunststoff wenigstens ein Polyurethan oder besteht aus wenigstens einem Polyurethan. Bevorzugt handelt es sich bei dem Polyurethan um wenigstens ein Polyetherpolyurethan, besonders bevorzugt wenigstens ein Polytetrahydrofuranpolyetherurethan. Bevorzugt sind thermoplastische Polyetherpolyurethane.

Gemäss einem Ausführungsbeispiel enthält der Separator oder ein in der Paste verwendeter Kunststoff Polyolefine, welche wenigstens ein einpolymerisiertes Monomer enthalten, das ausgewählt ist unter Ethylen, Propylen, But-1-en, Isobutylen, 4-Methyl-1-penten, Butadien, Isopren und Mischungen davon. Monomeren (wie z. B. Vinylaromaten) als Comonomeren. Beispielsweise können Polymere verwendet werden, die aus Olefinen ohne weitere Funktionalität aufgebaut sind, wie Polyethylen, Polypropylen, Polybuten-1 oder Polyisobutylen, Poly-4-methylpent-1-en, Polyisopren, Polybutadien, Polymere von Cycloolefinen, beispielsweise Cyclopenten sowie Copolymerisate von Mono- oder Diolefinen wie Polyvinylcyclohexan.

Gemäss einem Ausführungsbeispiel können Polyethylen-Homopolymere niedriger Dichte (PE-LD) und Polypropylen-Homopolymere und Polypropylen-Copolymere zur Verwendung kommen.

Ein Polyethylen (PE)-Homopolymere kann ein Element der nachfolgenden Gruppe enthalten, wobei die Gruppe aus den Gruppenelementen PE-ULD (ULD = Ultra low density), PE-VLD (VPL = very low density), PE-LD (LD = low density), PE-LLD (LLD = linear low density), PE-MD (MD = middle density), PE-HD (HD = high density), PE-HD-HMW (HMW = high molecular weight), PE-HD-UHMW (UHMW = ultra high molecular weight), besteht.

Eine Klassierung der Polyethylen (PE)-Homopolymere kann nach deren Dichte erfolgen. PE-ULD oder PE-VLD weisen eine Dichte unter 0,905 g/ cm³ auf.

PE-LD weist eine Dichte von 0,915 bis 0,935 g/cm³ auf. PE-LD ist beispielsweise erhältlich aus einem Hochdruckverfahren (ICI) bei 1000 bis 3000 bar und 150 bis 300 °C mit Sauerstoff oder Peroxiden als Katalysatoren in Autoklaven oder Rohrreaktoren. Die Kristallinität kann 40 bis 50 % betragen, die mittlere Molmasse bis 600 000 g/mol. PE-LD kann stark verzweigt sein, wobei Verzweigungen mit unterschiedlicher Kettenlänge vorgesehen sind.

PE-LLD ist erhältlich mit Metallkomplex-Katalysatoren im Niederdruckverfahren aus der Gasphase, aus einer Lösung (z. B. Benzin), in einer Suspension oder mit einem modifizierten Hochdruckverfahren. PE-LLD ist schwach verzweigt mit in sich unverzweigten Seitenketten, Molmassen höher als bei PE-LD. PE-MD weist eine Dichte zwischen 0,92 und 0,93 g/cm³ auf.

PE-MD weist eine Dichte zwischen 0,93 und 0,94 g/cm³ auf.

PE-HD weist eine Dichte 0,942 bis 0,965 g/cm³ auf. PE-HD ist erhältlich nach dem Mitteldruck-(Phillips) und Niederdruck-(Ziegler)-Verfahren. Beim Phillips Verfahren werden Drücke von bei 30 bis 40 bar, Temperaturen 85 bis 180 °C eingesetzt. Üblicherweise wird Chromoxid als Katalysator verwendet. Die Molmassen betragen etwa 50 000 g/mol.

Beim Ziegler Verfahren werden Drücke von 1 bis 50 bar, Temperaturen von 20 bis 150 °C verwendet. Als Katalysatoren kommen Aluminiumalkyle, Titanhalogenide, Titanester zum Einsatz. Die Molmassen liegen im Bereich von etwa 200 000 bis 400 000 g/mol. Die Herstellung von PE-HD gemäss Ziegler Verfahren kann in Suspension, in Lösung, in der Gasphase erfolgen. PE-HD ist üblicherweise sehr schwach verzweigt, und weist eine Kristallinität 60 bis 80 % auf.

PE-HD-HMW ist erhältlich nach Zieglerverfahren, Phillipsverfahren oder einem Gasphasenverfahren. PE-HD-HMW weist eine Dichte von mehr als 0,965 g/cm³ auf.

PE-HD-UHMW (UHMW = ultra high molecular weight) ist erhältlich nach Zieglerverfahren mit modifizierten Ziegler-Katalysator. Die Molmasse liegt im Bereich von 3 000 000 bis 6 000 000 g/mol. PE-HD-HMW weist eine Dichte von mehr als 0,97 g/cm³ auf.

Gemäss einem Ausführungsbeispiel kann der Separator oder ein in der Paste verwendeter Kunststoff Polypropylen enthalten. Unter der Bezeichnung Polypropylen sollen nachfolgend sowohl Homo- als auch Copolymere des Propylens verstanden werden. Copolymere des Propylens enthalten in untergeordneten Mengen mit Propylen copolymerisierbare Monomere, beispielsweise C2-C8-Alk-1-ene wie u. a. Ethylen, But-1-en, Pent-1-en oder Hex-1-en. Es können auch zwei oder mehr verschiedene Comonomere verwendet werden.

Geeignete Polypropylene weisen in der Regel eine Schmelzflussrate (MFR), nach ISO 1 133, von 0,1 bis 200 g/10 min, insbesondere von 0,2 bis 100 g/10 min, bei 230 °C und unter einem Gewicht von 2,16 kg auf.

Gemäss einem Ausführungsbeispiel enthält der Separator oder ein in der Paste verwendeter Kunststoff ein halogenhaltiges Polymer. Zu den Halogene enthaltenden Polymeren gehören Polytetrafluorethylenhomo- und -copolymere, Polychloropren, chlorierte und fluorierte Kautschuke, chloriertes und bromiertes Copolymer von Isobutylen-Isopren (Halogen-Kautschuk), chloriertes und sulfochloriertes Polyethylen, Copolymere von Ethylen und chloriertem Ethylen und chloriertem Ethylen, Epichlorhydrincompound-Copolymere, insbesondere Polymere von Halogen enthaltenden Vinylverbindungen, z. B. Polyvinylchlorid (PVC), Polyvinylidenchlorid (PVDC), Polyvinylfluorid, Polyvinylidenfluorid sowie Copolymere davon, wie Vinylchlorid/- Vinylidenchlorid-, Vinylchlorid/Vinylacetat- oder Vinylidenchlorid/Vinylacetat- Copolymere. Polyvinylchlorid wird mit unterschiedlichem Gehalt an Weichmachern eingesetzt, mit einem Gehalt an Weichmachern von 0 bis 12 % als Hart-PVC, von mehr als 12 % als Weich-PVC beziehungsweise mit sehr hohem Gehalt an Weichmachern als PVC-Paste. Übliche Weichmacher sind z. B. Phthalate, Epoxide, Adipinsäureester.

Polyvinylchlorid wird durch radikalische Polymerisation von Vinylchlorid in Substanz-, Suspensions-, Mikrosuspension- und Emulsionspolymerisation hergestellt. Die Polymerisation wird häufig durch Peroxide eingeleitet.

Polyvinylidenchlorid wird durch radikalische Polymerisation von Vinylidenchlorid hergestellt. Vinylidenchlorid kann auch mit (Meth)acrylaten, Vinylchlorid oder Acrylnitril copolymerisiert werden.

Gemäss einem Ausführungsbeispiel enthält der Separator oder ein in der Paste verwendeter Kunststoff einen Polyester. Polyester sind Kondensationsprodukte aus einem oder mehreren Polyolen und einer oder mehreren Polycarbonsäuren. In linearen Polyestern ist das Polyol ein Diol und die Polycarbonsäure eine Dicarbonsäure. Die Diolkomponente kann unter Ethylenglykol, 1,4-Cyclohexandimethanol, 1,2-Propandiol, 1,3-Propandiol, 1,4-Butandiol, 2,2-Dimethyl-1,3-propandiol, 1,6-Hexandiol, 1,2-Cyclohexandiol, 1,4-Cyclohexandiol, 1,2-Cyclohexandimethanol und 1,3-Cyclohexandimethanol ausgewählt sein. Ferner kommen Diole in Betracht, deren Alkylenkette durch nicht benachbarte Sauerstoffatome ein- oder mehrfach unterbrochen ist. Hierzu zählen Diethylenglykol, Triethylenglykol, Dipropylenglykol, Tripropylenglykol und dergleichen. In der Regel enthält das Diol 2 bis 18 Kohlenstoffatome, vorzugsweise 2 bis 8 Kohlenstoffatome. Cycloaliphatische Diole können in Form ihres cis-oder trans-isomeren oder als Isomerengemisch eingesetzt werden. Die Säurekomponente kann eine aliphatische, alicyclische oder aromatische Dicarbonsäure sein. Die Säurekomponente linearer Polyester ist in der Regel ausgewählt unter Terephthalsäuren, Isophthalsäuren, 1,4-Cyclohexandicarbonsäure, 1,3-Cyclohexandicarbonsäuren, Bernsteinsäuren, Glutarsäuren, Adipinsäuren, Sebacinsäuren, 1,12-Dodecandisäure, 2,6-Naphthalindicarbonsäure und Gemischen davon.

Gemäss einem Ausführungsbeispiel enthält der Separator oder ein in der Paste verwendeter Kunststoff Polyalkylenterephthalate, beispielsweise Polyethylenterephthalate (PET), die durch Kondensation von Terephthalsäure mit Diethylenglykol erhältlich sind. PET ist des Weiteren auch durch Umesterung von Dimethylterephthalat mit Ethylenglykol unter Abspaltung von Methanol zum Bis(2-hydroxyethyl)terephthalat und dessen Polykondensation unter Freisetzung von Ethylenglykol erhältlich. Weitere bevorzugte Polyester sind Polybutylenterephthalate (PBT), die durch Kondensation von Terephthalsäure mit 1,4-Butandiol erhältlich sind, Polyalkylennaphthalate (PAN) wie Polyethylen-2,6- naphthalate (PEN), Poly-1,4-cyclohexandimethylenterephthalate (PCT), sowie Copolyester von Polyethylenterephthalat mit Cyclohexandimethanol (PDCT), Copolyester von Polybutylenterephthalat mit Cyclohexandimethanol. PET und PBT weisen eine hohe Beständigkeit als thermoplastische Werkstoffe auf.

Gemäss einem Ausführungsbeispiel enthält der Separator oder ein in der Paste verwendeter Kunststoff ein Polycarbonat oder ein Polyestercarbonat. Polycarbonate entstehen z. B. durch Kondensation von Phosgen oder Kohlensäureestern wie Diphenylcarbonat oder Dimethylcarbonat mit Dihydroxyverbindungen.

Gemäss einem Ausführungsbeispiel enthält der Separator oder ein in der Paste verwendeter Kunststoff ein Polyamid (Kurzzeichen PA) oder Copolyamiden, die als wesentliche Strukturelemente Amid-Gruppen in der Polymerhauptkette aufweisen. Polyamide können beispielsweise durch Polykondensation aus Diaminen und Dicarbonsäuren oder deren Derivaten hergestellt werden. Polyamide können gegebenenfalls mit einem Elastomer als Modifiziermittel hergestellt werden. Geeignete Copolymamide sind beispielsweise Blockcopolymere der vorstehend erwähnten Polyamide mit Polyolefinen, Olefin-Copolymeren, lonomeren oder chemisch gebundenen oder gepfropften Elastomeren; oder mit Polyethern, beispielsweise mit Polyethylenglykol, Polypropylenglycol oder Polytetramethylenglycol; sowie Polyamide oder Copolyamide, modifiziert mit EPDM oder ABS.

Gemäss einem Ausführungsbeispiel enthält der Separator oder ein in der Paste verwendeter Kunststoff eine Polymerzusammensetzung, wobei es sich bei dem Polymer um einen Polymerblend handelt. Unter dem Begriff "Polymerblend" versteht man eine Mischung aus zwei oder mehreren Polymeren oder Copolymeren. Polymerblends dienen dazu, die Eigenschaften der Basiskomponente zu verbessern.

Das Verfahren ist insbesondere vorteilhaft anwendbar, wenn eine Mehrzahl von Zellelementen oder Zellstapeln gleichzeitig erzeugt werden sollen. Eine Druckauflage kann Abmessungen von bis zu 60 cm x 60 cm aufweisen.

Die Gitterstruktur kann beliebige Formen aufweisen. Insbesondere kann die Gitterstruktur eine L-förmige Form aufweisen oder eine rechteckige Oberfläche aufweisen. Die Dicke der Gitterstruktur kann im Bereich von 4 bis 200 Mikrometer liegen, das heisst, es können mit dem Verfahren Energiespeicher für tragbare Geräte, Sensoren und dergleichen hergestellt werden.

Wenn ein Härteverfahren zur Behandlung der in der Gitterstruktur befindlichen Paste zur Anwendung kommen soll, kann ein für die verwendete Materialkombination optimales Härteverfahren ausgewählt werden. Ein Härteverfahren gemäss einem Ausführungsbeispiel kann die Paste Temperaturen über 50°C aussetzen. Beispielsweise kann ein derartiges Härteverfahren zum Einsatz kommen, wenn Lösungsmittel verdampft werden müssen, beispielsweise ölhaltige oder wasserhaltige Lösungsmittel. Ein Härteverfahren gemäss einem Ausführungsbeispiel kann die Paste Temperaturen unter 0°C aussetzen. Ein Härteverfahren gemäss einem Ausführungsbeispiel kann ein Sinterverfahren beinhalten. Ein Härteverfahren gemäss einem Ausführungsbeispiel kann die Verwendung von UV-Lichtquellen umfassen.

### Kurzbeschreibung der Zeichnungen

Nachfolgend wird die erfindungsgemässe Vorrichtung anhand einiger Ausführungsbeispiele dargestellt. Es zeigen
Fig. 1 eine Ansicht eines Zellelements eines Energiespeichers nach einem ersten Ausführungsbeispiel,
Fig. 2 eine Vorrichtung zur Herstellung einer Elektrode eines Energiespeichers gemäss Fig. 1,
Fig. 3 eine Vorrichtung zur Herstellung einer weiteren Elektrode eines Energiespeichers gemäss Fig. 1,
Fig. 4 eine Ansicht eines Energiespeichers nach einem zweiten Ausführungsbeispiel,
Fig. 5 eine Vorrichtung zur Herstellung einer Elektrode eines Energiespeichers gemäss Fig. 4.

### Detaillierte Beschreibung der Zeichnungen

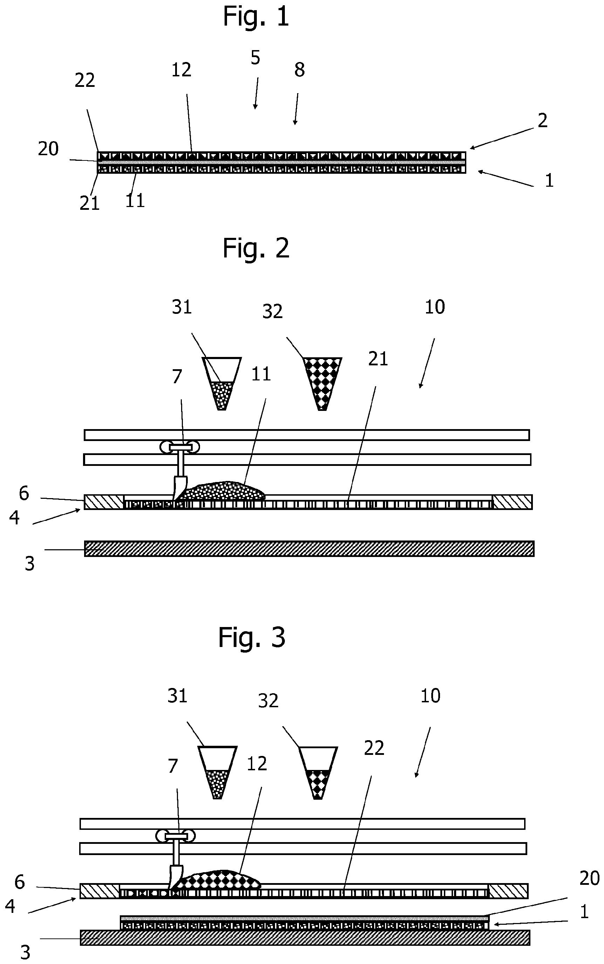

Fig. 1 zeigt ein Zellelement 8 eines Energiespeichers 5 gemäss einem ersten Ausführungsbeispiel. Das Zellelement 8 besteht aus einer ersten Elektrode 1 und einer zweiten Elektrode 2. Zwischen der ersten Elektrode 1 und der zweiten Elektrode 2 befindet sich ein Separator 20. Die erste Elektrode 1 umfasst eine erste Gitterstruktur 21, in welcher eine erste Paste 11 enthalten ist. Die zweite Elektrode 2 umfasst eine zweite Gitterstruktur 22, in welcher eine zweite Paste 12 enthalten ist.

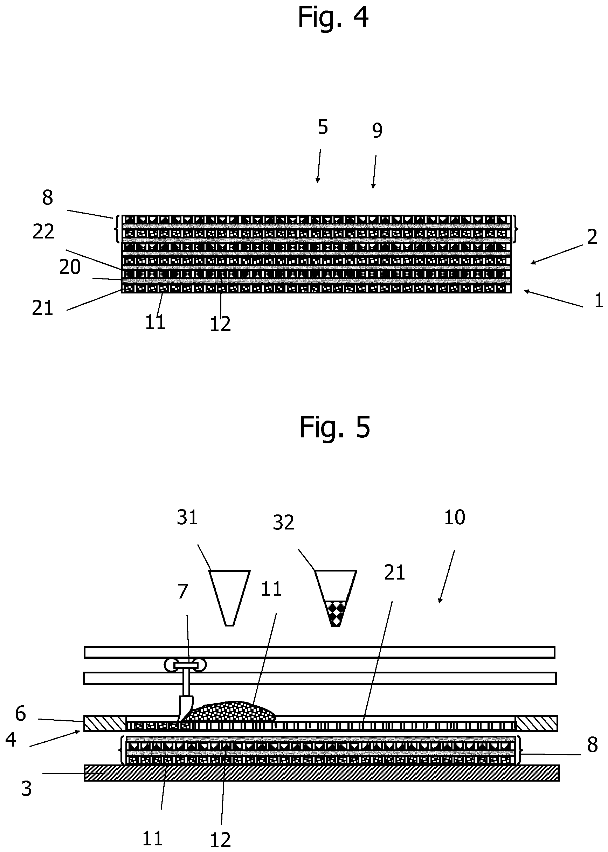

Fig. 2 zeigt eine Vorrichtung zur Herstellung einer Elektrode 1 eines Energiespeichers 5 gemäss Fig. 1. Die Vorrichtung 10 zur Herstellung eines Energiespeichers 5 umfasst eine Druckauflage 3, wobei die Druckauflage 3 zur Auflage eines Zellelements 8 (siehe Fig. 1) oder Zellstapels 9 (siehe Fig. 4) des Energiespeichers 5 ausgebildet ist. Die Vorrichtung 10 umfasst ein Drucksieb 4, welches einen Rahmen 6 aufweist, der eine Gitterstruktur 21 zur Aufnahme einer Paste 11 für eine Elektrode 1 des Energiespeichers 5 enthält. Mittels einer zur Vorrichtung 10 gehörigen Verteilvorrichtung 7 ist die Paste 11 auf der Gitterstruktur 21 verteilbar und Ausnehmungen oder Öffnungen der Gitterstruktur 21 mit der Paste 11 befüllbar. Die Gitterstruktur 21 mit der Paste 11 ist vom Drucksieb 4 abkoppelbar. Die Gitterstruktur 21 und die Paste 11 bilden die Elektrode 1 des Zellelements 8 oder Zellstapels 9 des Energiespeichers 5 aus. Gemäss dem vorliegenden Ausführungsbeispiel sind eine erste Auftragungsvorrichtung 31 und eine zweite Auftragungsvorrichtung 32 vorgesehen, die unterschiedliche Pasten 11, 12 enthalten.

Fig. 3 zeigt eine Vorrichtung zur Herstellung einer weiteren Elektrode 2 eines Energiespeichers 5 gemäss Fig. 1. Die Vorrichtung 10 umfasst eine erste Auftragungsvorrichtung 31 enthaltend eine erste Paste 11 und eine zweite Auftragungsvorrichtung 32 enthaltend eine zweite Paste 12. Im Rahmen 6 des Drucksiebs war gemäss Fig. 2 eine erste Gitterstruktur 21 angeordnet, welche zur Aufnahme der ersten Paste 11 ausgebildet ist, wobei mittels der ersten Auftragungsvorrichtung 31 die erste Paste auf die erste Gitterstruktur 21 für eine erste Elektrode 1 aufgebracht worden ist. Die Verteilvorrichtung 7 ist zur Verteilung der ersten Paste 11 auf der ersten Gitterstruktur 21 auf der Druckauflage 3 ausgebildet. Ausnehmungen oder Öffnungen der ersten Gitterstruktur 21 sind mit der ersten Paste 11 befüllbar. Die erste Gitterstruktur 21, enthaltend die erste Paste 11, ist vom Rahmen 6 des Drucksiebs 4 abgekoppelt und liegt auf der Druckauflage 3 auf.

Der Rahmen 6 ist zur Aufnahme einer zweiten Gitterstruktur 22 ausgebildet, wobei mittels der zweiten Auftragungsvorrichtung 32 die zweite Paste 12 auf die zweite Gitterstruktur 22 für eine zweite Elektrode 2 aufbringbar ist. Die Verteilvorrichtung 7 ist zur Verteilung der zweiten Paste 12 auf der zweiten Gitterstruktur 22 auf der Druckauflage 3 ausgebildet. Ausnehmungen oder Öffnungen der zweiten Gitterstruktur 22 sind mit der zweiten Paste 12 befüllbar. Die zweite Gitterstruktur 22, enthaltend die zweite Paste 12, ist vom Rahmen 6 des Drucksiebs 4 abkoppelbar und auf der Druckauflage 3 ablegbar.

Fig. 4 zeigt eine Ansicht eines Energiespeichers 5 nach einem zweiten Ausführungsbeispiel. Der in Fig. 4 gezeigte Zellstapel 9 enthält eine Mehrzahl von Zellelementen 8. Gemäss dem in Fig. 4 gezeigten exemplarischen Beispiel sind drei Zellelemente 8 vorgesehen. Jedes der Zellelemente 8 besteht aus einer ersten Elektrode 1 und einer zweiten Elektrode 2. Zwischen der ersten Elektrode 1 und der zweiten Elektrode 2 befindet sich ein Separator 20. Die erste Elektrode 1 umfasst eine erste Gitterstruktur 21, in welcher eine erste Paste 11 enthalten ist. Die zweite Elektrode 2 umfasst eine zweite Gitterstruktur 22, in welcher eine zweite Paste 12 enthalten ist. Zwischen benachbarten Zellelementen 8 befindet sich ebenfalls ein Separator 20.

Fig. 5 zeigt eine Vorrichtung zur Herstellung eines oder mehrerer Zellelemente 8 eines Energiespeichers 5 gemäss Fig. 4. Die Vorrichtung 10 umfasst eine erste Auftragungsvorrichtung 31 enthaltend eine erste Paste 11 und eine zweite Auftragungsvorrichtung 32 enthaltend eine zweite Paste 12. Im Rahmen 6 des Drucksiebs war gemäss Fig. 2 eine erste Gitterstruktur 21 angeordnet, welche zur Aufnahme der ersten Paste 11 ausgebildet ist, wobei mittels der ersten Auftragungsvorrichtung 31 die erste Paste 11 auf die erste Gitterstruktur 21 für eine erste Elektrode 1 aufgebracht worden ist. Die Verteilvorrichtung 7 ist zur Verteilung der ersten Paste 11 auf der ersten Gitterstruktur 21 auf der Druckauflage 3 ausgebildet. Ausnehmungen oder Öffnungen der ersten Gitterstruktur 21 sind mit der ersten Paste 11 befüllbar. Die erste Gitterstruktur 21, enthaltend die erste Paste 11, ist vom Rahmen 6 des Drucksiebs 4 abgekoppelt worden und liegt auf der Druckauflage 3 auf. Auf der ersten Elektrode 1 des zuunterst gelegenen Zellelements 8 befindet sich ein Separator 20.

Der Rahmen 6 ist zur Aufnahme einer zweiten Gitterstruktur 22 ausgebildet, wobei mittels der zweiten Auftragungsvorrichtung 32 die zweite Paste 12 auf die zweite Gitterstruktur 22 für eine zweite Elektrode 2 aufgebracht worden ist. Die Verteilvorrichtung 7 ist zur Verteilung der zweiten Paste 12 auf der zweiten Gitterstruktur 22 auf der Druckauflage 3 ausgebildet. Ausnehmungen oder Öffnungen der zweiten Gitterstruktur 22 sind mit der zweiten Paste 12 befüllbar. Die zweite Gitterstruktur 22, enthaltend die zweite Paste 12, ist vom Rahmen 6 des Drucksiebs 4 abgekoppelt und liegt ebenfalls auf der Druckauflage 3 auf. Die zweite Elektrode 2 des Zellelements 8 befindet sich somit auf dem Separator 20, der wiederum auf der ersten Elektrode 1 aufliegt, die wiederum auf der Druckauflage 3 aufliegt. Auf der zweiten Elektrode 2 des zuunterst gelegenen Zellelements 8 befindet sich ebenfalls ein Separator 20.

Gemäss Fig. 5 wird die erste Elektrode 1 eines zweiten Zellelements 8 in gleicher Weise wie die erste Elektrode 1 des zuunterst gelegenen Zellelements 8 hergestellt. Daher soll an dieser Stelle Bezug auf die Merkmale des in den vorhergehenden Ausführungsbeispielen genannten Systems gemacht werden.

Ein Verfahren zur Herstellung eines Energiespeichers 5 mittels einer Vorrichtung 10 wird nachfolgend beschrieben. Die Vorrichtung 10 umfasst eine Druckauflage 3, die zur Auflage eines Zellelements 8 oder Zellstapels 9 des Energiespeichers 5 ausgebildet ist. Die Vorrichtung 10 umfasst ferner ein Drucksieb 4, welches einen Rahmen 6 aufweist, der eine Gitterstruktur 21, 22 zur Aufnahme einer Paste 11, 12 enthält. Mittels einer zur Vorrichtung 10 gehörigen Auftragungsvorrichtung 31, 32 wird die Paste 11, 12 auf die Gitterstruktur 21, 22 aufgetragen. Die Paste 11, 12 wird mittels einer Verteilvorrichtung 7 auf der Gitterstruktur 21, 22 verteilt. Allfällige Ausnehmungen oder Öffnungen in der Gitterstruktur 21, 22 werden mit der Paste 11, 12 befüllt. Anschliessend wird die Gitterstruktur 21, 22 mit der Paste vom Rahmen abgekoppelt und die Gitterstruktur 21, 22 und die Paste 11, 12 auf der Druckauflage abgelegt werden, wobei die Gitterstruktur 21, 22 und die Paste 11, 12 eine Elektrode 1, 2 des Zellelements 8 oder Zellstapels 9 ausbilden.

Nach einer Verfahrensvariante wird eine Mehrzahl von Gitterstrukturen 21, 22 mit unterschiedlichen Pasten 11, 12 befüllt, um zumindest eine erste und eine zweite Elektrode 1, 2 auszubilden, die voneinander durch einen Separator 20 getrennt sind.

Nach einer Verfahrensvariante wird die erste oder zweite Elektrode 1, 2 in einer Trocknungsanlage oder Härteanlage getrocknet oder gehärtet, nachdem die Gitterstruktur 21, 22 vom Rahmen 6 abgekoppelt worden ist, bevor die erste Elektrode 1 auf der Druckauflage 3 oder die zweite Elektrode 2 auf dem Separator 20 angeordnet wird.

Der Zellstapel 9 kann nach einem Ausführungsbeispiel eine Mehrzahl von Zellelementen 8 umfassen. Jedes der Zellelemente 8 kann einen Elektrolyten enthalten. Der Elektrolyt in der ersten oder zweiten Paste 11, 12 enthalten sein.

Der Separator 20 kann nach einem Ausführungsbeispiel ein porenhaltiges Material enthalten. Eine Trennschicht kann vorgesehen werden, wenn die Herstellung des Zellelements 8 oder des Zellstapels 9 abgeschlossen ist. Insbesondere kann die Trennschicht als eine Wand eines Gehäuses ausgebildet sein.

Nach einem Ausführungsbeispiel kann jede der Gitterstrukturen 21, 22 je ein Kontaktende aufweisen, welches mit sämtlichen zu gleichpoligen Elektroden 1, 2 gehörigen Gitterstrukturen 21, 22 des Zellstapels 9 verbunden ist oder verbunden wird, bevor das Zellelement 8 oder der Zellstapel 9 in einem Gehäuse angeordnet werden.

Gemäss einer Verfahrensvariante können auf der Druckauflage 3 eine Mehrzahl von Elektroden 1, 2 für eine Mehrzahl von Zellelementen 8 oder Zellstapeln 9 nebeneinander angeordnet werden. Insbesondere können die Zellelemente 8 oder Zellstapel 9 nach Fertigstellung voneinander getrennt werden.

Für den Fachmann ist offensichtlich, dass viele weitere Varianten zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind.

## Patentansprüche

1. Verfahren zur Herstellung eines Energiespeichers (5) mittels einer Vorrichtung (10), wobei die Vorrichtung (10) eine Druckauflage (3) umfasst, die zur Auflage eines Zellelements (8) oder Zellstapels (9) des Energiespeichers (5) ausgebildet ist, wobei die Vorrichtung ein Drucksieb (4) umfasst, welches einen Rahmen (6) aufweist, der eine erste Gitterstruktur (21) zur Aufnahme einer ersten und zweiten Paste (11, 12) enthält, wobei mittels einer zur Vorrichtung (10) gehörigen ersten Auftragungsvorrichtung (31) die erste Paste (11) auf die erste Gitterstruktur (21) aufgetragen wird, wobei mittels einer zur Vorrichtung (10) gehörigen Verteilvorrichtung (7) die erste Paste (11) auf der ersten Gitterstruktur (21) verteilt wird, wobei allfällige Ausnehmungen oder Öffnungen in der ersten Gitterstruktur (21) mit der ersten Paste (11) befüllt werden, **dadurch gekennzeichnet, dass** die erste Gitterstruktur (21) mit der ersten Paste (11) vom Rahmen (6) abgekoppelt wird, und die erste Gitterstruktur (21) und die erste Paste (11) auf der Druckauflage (3) abgelegt werden, wobei die erste Gitterstruktur (21) und die erste Paste (11) eine erste Elektrode (1) des Zellelements (8) oder Zellstapels (9) ausbilden, wobei zumindest eine zweite Gitterstruktur (22) mit einer zweiten Paste (12) befüllt wird, um zumindest eine zweite Elektrode (2) auszubilden, wobei die erste Elektrode (1) und die zweite Elektrode (2) voneinander durch einen Separator (20) getrennt sind, wobei mittels einer zur Vorrichtung (10) gehörigen zweiten Auftragungsvorrichtung (32) die zweite Paste (12) auf die zweite Gitterstruktur (22) aufgetragen wird, wobei mittels der zur Vorrichtung (10) gehörigen Verteilvorrichtung (7) die zweite Paste (12) auf der zweiten Gitterstruktur (22) verteilt wird, wobei allfällige Ausnehmungen oder Öffnungen in der zweiten Gitterstruktur (22) mit der zweiten Paste (12) befüllt werden, wobei die zweite Gitterstruktur (22) mit der zweiten Paste (12) vom Rahmen (6) abgekoppelt wird, und die zweite Gitterstruktur (22) und die zweite Paste (12) auf dem Separator (20) abgelegt werden.

2. Verfahren nach Anspruch 1, wobei die erste oder zweite Elektrode (1, 2) in einer Trocknungsanlage oder Härteanlage getrocknet oder gehärtet wird, nachdem die erste und/oder zweite Gitterstruktur (21, 22) vom Rahmen (6) abgekoppelt worden ist, bevor die erste Elektrode (1) auf der Druckauflage (3) oder die zweite Elektrode (2) auf dem Separator (20) angeordnet wird.

3. Verfahren nach einem der vorhergehenden Ansprüche, wobei der Zellstapel (9) eine Mehrzahl von Zellelementen (8) umfasst.

4. Verfahren nach einem der vorhergehenden Ansprüche, wobei jedes der Zellelemente (8) einen Elektrolyten enthält.

5. Verfahren nach Anspruch 4, wobei der Elektrolyt in der ersten oder zweiten Paste (11, 12) enthalten ist.

6. Verfahren nach einem der vorhergehenden Ansprüche, wobei der Separator (20) ein porenhaltiges Material enthält.

7. Verfahren nach einem der vorhergehenden Ansprüche, wobei eine Trennschicht vorgesehen wird, wenn die Herstellung des Zellelements (8) oder des Zellstapels (9) abgeschlossen ist.

8. Verfahren nach Anspruch 7, wobei die Trennschicht als eine Wand eines Gehäuses ausgebildet ist.

9. Verfahren nach einem der vorhergehenden Ansprüche, wobei jede der ersten und zweiten Gitterstrukturen (21, 22) je ein Kontaktende aufweist, welches mit sämtlichen zu den gleichpoligen ersten bzw. zweiten Elektroden (1, 2) gehörigen ersten bzw. zweiten Gitterstrukturen (21, 22) des Zellstapels (9) verbunden ist.

10. Verfahren nach einem der vorhergehenden Ansprüche, wobei auf der Druckauflage (3) eine Mehrzahl der ersten und zweiten Elektroden (1, 2) für eine Mehrzahl der Zellelemente (8) oder Zellstapel (9) nebeneinander angeordnet werden.

11. Verfahren nach Anspruch 10, wobei die Zellelemente (8) oder Zellstapel (9) nach Fertigstellung voneinander getrennt werden.

12. System enthaltend eine Vorrichtung (10) zur Herstellung eines Energiespeichers (5) und den Energiespeicher (5), wobei die Vorrichtung (10) eine Druckauflage (3) umfasst, wobei die Druckauflage (3) zur Auflage eines Zellelements oder Zellstapels (8, 9) des Energiespeichers (5) ausgebildet ist, wobei die Vorrichtung (10) ein Drucksieb (4) umfasst, welches einen Rahmen (6) aufweist, der eine erste und eine zweite Gitterstruktur (21, 22) zur Aufnahme einer ersten und einer zweiten Paste (11, 12) für eine erste und eine zweite Elektrode (1, 2) des Energiespeichers (5) enthält, **dadurch gekennzeichnet, dass** mittels einer zur Vorrichtung (10) gehörigen Verteilvorrichtung (7) die erste Gitterstruktur (21) mit der ersten Paste (11) befüllbar ist und die erste Gitterstruktur (21) mit der ersten Paste (11) vom Drucksieb (4) abkoppelbar ist, wobei die erste Gitterstruktur (21) und die erste Paste (11) die erste Elektrode (1) des Zellelements (8) oder Zellstapels (9) des Energiespeichers (5) ausbilden, und wobei mittels der zur Vorrichtung (10) gehörigen Verteilvorrichtung (7) die zweite Gitterstruktur (22) mit der zweiten Paste (12) befüllbar ist und die zweite Gitterstruktur (22) mit der zweiten Paste (12) vom Drucksieb (4) abkoppelbar ist, wobei die zweite Gitterstruktur (22) und die zweite Paste (12) die zweite Elektrode (2) des Zellelements (8) oder Zellstapels (9) des Energiespeichers (5) ausbilden.

13. System nach Anspruch 12, wobei die Vorrichtung (10) eine erste Auftragungsvorrichtung (31) enthaltend die erste Paste (11) und eine zweite Auftragungsvorrichtung (32) enthaltend die zweite Paste (12) umfasst, wobei sich die erste Paste (11) von der zweiten Paste (12) unterscheidet.

14. System nach Anspruch 13, wobei im Rahmen (6) des Drucksiebs (4) die erste Gitterstruktur (21) angeordnet ist, welche zur Aufnahme der ersten Paste (11) ausgebildet ist, wobei mittels der ersten Auftragungsvorrichtung (31) die erste Paste (11) auf die erste Gitterstruktur (21) für eine erste Elektrode (1) aufbringbar ist, wobei die Verteilvorrichtung (7) zur Verteilung der ersten Paste (11) auf der ersten Gitterstruktur (21) auf der Druckauflage (3) ausgebildet ist, wobei die erste Gitterstruktur (21), enthaltend die erste Paste (11) vom Rahmen (6) des Drucksiebs (4) abkoppelbar ist und auf der Druckauflage (3) ablegbar ist, wobei der Rahmen (6) zur Aufnahme einer zweiten Gitterstruktur (22) ausgebildet ist, wobei mittels der zweiten Auftragungsvorrichtung (32) die zweite Paste (12) auf die zweite Gitterstruktur (22) für eine zweite Elektrode (2) aufbringbar ist, wobei die Verteilvorrichtung (7) zur Verteilung der zweiten Paste (12) auf der zweiten Gitterstruktur (22) auf der Druckauflage (3) ausgebildet ist, wobei die zweite Gitterstruktur (22), enthaltend die zweite Paste (12) vom Rahmen (6) des Drucksiebs (4) abkoppelbar ist und auf der Druckauflage (3) ablegbar ist.

15. System nach einem der Ansprüche 13 oder 14, wobei zwischen zwei benachbarten ersten und zweiten Elektroden (1, 2) ein Separator (20) vorgesehen ist.

## Claims

1. A method for producing an energy store (5) by means of a device (10), the device (10) comprising a printing pad (3) which is configured to support a cell element (8) or cell stack (9) of the energy store (5), wherein the device comprises a printing screen (4) having a frame (6) containing a first lattice structure (21) for receiving a first and second paste (11, 12), wherein by means of a first application device (31) belonging to the device (10), the first paste (11) is applied to the first lattice structure (21), wherein the first paste (11) is distributed on the first lattice structure (21) by means of a distribution device (7) belonging to the device (10), wherein any recesses or openings in the first lattice structure (21) are filled with the first paste (11), **characterized in that** the first lattice structure (21) is decoupled from the frame (6) with the first paste (11), and the first lattice structure (21) and the first paste (11) are deposited on the printing pad (3), wherein the first lattice structure (21) and the first paste (11) form a first electrode (1) of the cell element (8) or cell stack (9), wherein at least one second lattice structure (22) is filled with a second paste (12) for forming at least a second electrode (2), wherein the first electrode (1) and the second electrode (2) are separated from one another by a separator (20), wherein the second paste (12) is applied to the second lattice structure (22) by means of a second application device (32) belonging to the device (10), wherein the second paste (12) is applied by means of the distribution device (7) belonging to the device (10) on the second lattice structure (22), wherein any recesses or openings in the second lattice structure (22) are filled with the second paste (12), wherein the second lattice structure (22) with the second paste (12) are decoupled from the frame (6), and the second lattice structure (22) and the second paste (12) are deposited on the separator (20).

2. The method of claim 1, wherein the first or second electrode (1, 2) is dried or hardened in a drying plant or a hardening plant after the first and/or second lattice structure (21, 22) has been decoupled from the frame (6), before the first electrode (1) is placed on the printing pad (3) or the second electrode (2) on the separator (20).

3. The method of one of the preceding claims, wherein the cell stack (9) comprises a plurality of cell elements (8).

4. The method of one of the preceding claims, wherein each of the cell elements (8) contains an electrolyte.

5. The method of claim 4, wherein the electrolyte is contained in the first or second paste (11, 12).

6. The method of one of the preceding claims, wherein the separator (20) contains a porous material.

7. The method of one of the preceding claims, wherein a separating layer is provided when the production of the cell element (8) or the cell stack (9) is completed.

8. The method of claim 7, wherein the separating layer is formed as a wall of a housing.

9. The method of one of the preceding claims, in which each of the first and second lattice structures (21, 22) has a contact end which is connected to all the first and second lattice structures (21, 22) of the cell stack (9) belonging to all the respective homopolar first or second electrodes (1, 2).

10. The method of one of the preceding claims, wherein a plurality of the first and second electrodes (1, 2) for a plurality of cell elements (8) or cell stacks (9) are arranged next to one another on the printing pad (3).

11. The method of claim 10, wherein the cell elements (8) or cell stacks (9) are separated from one another after their production is completed.

12. System containing a device (10) for producing an energy store (5) and the energy store (5), wherein the device (10) comprises a printing pad (3), wherein the printing pad (3) is configured to support a cell element or cell stack (8 , 9) of the energy store (5), wherein the device (10) comprises a printing screen (4) having a frame (6) containing a first and a second lattice structure (21, 22) for receiving a first and a second paste (11, 12) for a first and a second electrode (1, 2) of the energy store (5), **characterized in that** the first lattice structure (21) can be filled with the first paste (11) by means of a distribution device (7) belonging to the device (10) and the first lattice structure (21) can be filled with the first paste (11) and first lattice structure (21) with the first paste (11) can be decoupled from the printing screen (4), wherein the first lattice structure (21) and the first paste (11) form the first electrode (1) of the cell element (8) or cell stack (9) of the energy store (5), and the second lattice structure (22) can be filled with the second paste (12) by means of the distribution device (7) belonging to the device (10) and the second lattice structure (22) with the second paste (12) can be decoupled from the printing screen (4), wherein the second lattice structure (22) and the second paste (12) form the second electrode (2) of the cell element (8) or cell stack (9) of the energy store (5).

13. The system of claim 12, wherein the device (10) comprises a first application device (31) containing the first paste (11) and a second application device (32) containing the second paste (12), wherein the first paste (11) differs from the second paste (12).

14. The system of claim 13, wherein the first lattice structure (21) is arranged in the frame (6) of the printing screen (4), which is configured to receive the first paste (11), wherein the first paste (11) can be applied to the first lattice structure (21) for a first electrode (1) by means of the first application device (31), wherein the distribution device (7) is configured to distribute the first paste (11) on the first lattice structure (21) on the printing pad (3), wherein the first lattice structure (21) containing the first paste (11) can be decoupled from the frame (6) of the printing screen (4) and can be placed on the printing pad (3), wherein the frame (6) is configured to accommodate a second lattice structure (22), wherein the second paste (12) can be applied to the second lattice structure (22) for a second electrode (2) by means of the second application device (32), wherein the distribution device (7) is configured to distribute the second paste (12) on the second lattice structure (22) on the printing pad (3), wherein the second lattice structure (22) containing the second paste (12) can be decoupled from the frame (6) of the printing screen (4) and can be placed on the printing pad (3).

15. The system of one of claims 13 or 14, wherein a separator (20) is provided between two adjacent first and second electrodes (1, 2).

## Revendications

1. Méthode de production d'un accumulateur d'énergie (5) au moyen d'un dispositif (10), le dispositif (10) comprenant un support de sérigraphie (3) destiné à supporter un élément de cellule (8) ou un empilement de cellules (9) de l'accumulateur d'énergie (5), dans lequel le dispositif comprend un écran de sérigraphie (4) ayant un cadre (6) contenant une première structure en treillis (21) pour recevoir une première et une deuxième pâte (11, 12), dans lequel au moyen d'un premier dispositif d'application (31) appartenant au dispositif (10), la première pâte (11) est appliquée sur la première structure en treillis (21) en ce qu'au moyen d'un dispositif de distribution (7) appartenant au dispositif (10) la première pâte (11) est répartie sur la première structure en treillis (21) dans lequel d'éventuels évidements ou ouvertures de la première structure en treillis (21) sont remplis avec la première pâte (11), **caractérisé en ce que** la première structure en treillis (21) avec la première pâte (11) est découplée du cadre (6) et la première structure en treillis (21) et la première pâte (11) sont déposées sur le support de sérigraphie (3), la première structure en treillis (21) et la première pâte (11) formant une première électrode (1) de l'élément de cellule (8) ou d'empilement de cellules (9), **en ce qu'**au moins une deuxième structure en treillis (22) est remplie d'une deuxième pâte (12) afin de former au moins une deuxième électrode (2), la première électrode (1) et la deuxième électrode (2) étant séparés l'un de l'autre par un séparateur (20), **en ce que** la deuxième pâte (12) est appliquée sur la deuxième structure en treillis (22) au moyen d'un deuxième dispositif d'application (32) appartenant au dispositif (10), la deuxième pâte (12) étant distribuée sur la deuxième structure en treillis (22) au moyen du dispositif de distribution (7) appartenant au dispositif (10), **en ce que** d'éventuels évidements ou ouvertures dans la deuxième structure en treillis (22) sont remplis de la deuxième pâte (12), **en ce que** la deuxième structure en treillis (22) avec la deuxième pâte (12) est découplée du cadre (6) et la deuxième structure en treillis (22) et la deuxième pâte (12) sont déposées sur le séparateur (20).

2. Méthode selon la revendication 1, dans laquelle la première ou la deuxième électrode (1, 2) est séchée ou durcie au moyen d'un système de séchage ou d'un système de durcissement après que la première et/ou la deuxième structure en treillis (21, 22) a été découplée du cadre (6), avant de placer la première électrode (1) sur le support de sérigraphie (3) ou la deuxième électrode (2) sur le séparateur (20).

3. Méthode selon l'une quelconque des revendications précédentes, dans laquelle l'empilement de cellules (9) comprend une pluralité d'éléments de cellules (8).

4. Méthode selon l'une quelconque des revendications précédentes, dans laquelle chacun des éléments de cellule (8) contient un électrolyte.

5. Méthode selon la revendication 4, dans laquelle l'électrolyte est contenu dans la première ou la deuxième pâte (11, 12).

6. Méthode selon l'une quelconque des revendications précédentes, dans laquelle le séparateur (20) contient un matériau poreux.

7. Méthode selon l'une des revendications précédentes, dans laquelle une couche de séparation est prévue lorsque la fabrication de l'élément de cellule (8) ou de l'empilement de cellules (9) est terminée.

8. Méthode selon la revendication 7, dans laquelle la couche de séparation est configurée comme une paroi d'un boîtier.

9. Méthode selon l'une des revendications précédentes, dans laquelle chacune des premières et deuxièmes structures en treillis (21, 22) a une extrémité de contact qui est reliée à toutes les premières et deuxièmes structures en treillis (21, 22) appartenant aux premières et deuxièmes électrodes (1, 2) de même polarité de l'empilement de cellules (9).

10. Méthode selon l'une des revendications précédentes, dans laquelle les plusieurs premières et deuxièmes électrodes (1, 2) pour les plusieurs éléments de cellule (8) ou empilements de cellules (9) sont disposées les unes à côté des autres sur le support de sérigraphie (3).

11. Méthode selon la revendication 10, dans laquelle les éléments de cellules (8) ou les empilements de cellules (9) sont séparés les uns des autres après achèvement.

12. Système contenant un dispositif (10) de production d'un accumulateur d'énergie (5) et l'accumulateur d'énergie (5), le dispositif (10) comprenant un support de sérigraphie (3), en ce que le support de sérigraphie (3) est configuré pour supporter un élément de cellule ou un empilement de cellules (8, 9) de l'accumulateur d'énergie (5), le dispositif (10) comprenant un écran de sérigraphie (4) ayant un cadre (6) ayant une première et une deuxième structure en treillis (21, 22) pour recevoir une première et une deuxième pâte (11, 12) pour une première et une deuxième électrode (1, 2) de l'accumulateur d'énergie (5), **caractérisé en ce qu'**au moyen d'un dispositif de distribution (7) associé au dispositif (10) la première structure en treillis (21) peut être remplie avec la première pâte (11) et la première structure en treillis (21) avec la première pâte (11) peut être découplée de l'écran de sérigraphie (4), **en ce que** la première structure en treillis (21) et la première pâte (11) forment la première électrode (1) de l'élément de cellule (8) ou de l'empilement de cellules (9) de l'accumulateur d'énergie (5) et dans lequel la deuxième structure en treillis (22) peut être remplie de la deuxième pâte (12) au moyen du dispositif de distribution (7) associé au dispositif (10) et la deuxième structure en treillis (22) avec la deuxième pâte (12) peut être découplée de de l'écran de sérigraphie (4), **en ce que** la deuxième structure en treillis (22) et la deuxième pâte (12) forment la deuxième électrode (2) de l'élément de cellule (8) ou de l'empilement de cellules (9) de l'accumulateur d'énergie (5).

13. Système selon la revendication 12, dans lequel le dispositif (10) comprend un premier dispositif d'application (31) contenant la première pâte (11) et un deuxième dispositif d'application (32) contenant la deuxième pâte (12), en ce que la première pâte (11 ) diffère de la deuxième pâte (12).

14. Système selon la revendication 13, dans lequel la première structure en treillis (21) est disposée dans le cadre (6) de l'écran de sérigraphie (4), qui est configuré pour recevoir la première pâte (11), dans lequel la première pâte (11) peut être appliquée sur la première structure en treillis (21) pour une première électrode (1) au moyen du premier dispositif d'application (31), en ce que le dispositif de distribution (7) est configuré pour répartir la première pâte (11) sur la première structure en treillis ( 21) sur le support de sérigraphie (3), dans lequel la première structure en treillis (21) contenant la première pâte (11) peut être découplée du cadre (6) de l'écran de sérigraphie (4) et peut être placée sur le support de sérigraphie (3), en ce que le cadre (6) est configuré pour la réception d'une deuxième structure en treillis (22), en ce que la deuxième pâte (12) peut être appliquée sur la deuxième structure en treillis (22) pour former une deuxième électrode (2) au moyen du deuxième dispositif d'application (32), en ce que le dispositif de distribution (7) est configuré pour distribuer la deuxième pâte (12) sur la deuxième structure en treillis (22) sur le support de sérigraphie (3), dans lequel la deuxième structure en treillis (22) contenant la deuxième pâte (12) peut être découplée du cadre (6) de l'écran de sérigraphie (4) et peut être placée sur le support de sérigraphie (3).

15. Système selon l'une quelconque des revendications 13 ou 14, dans lequel un séparateur (20) est prévu entre deux des premières et deuxièmes électrodes adjacentes (1, 2).
